# FASCICULE DE BREVET EUROPEEN

(11) **EP 2 491 199 B1**
(45) Date de publication et mention de la délivrance du brevet: **15.04.2015**
(21) Numéro de dépôt: 10768233.8
(22) Date de dépôt: 19.10.2010
(51) Int. Cl.: E04F 15/16, B32B 37/02, B32B 38/10, B32B 37/12, B32B 37/20

(54) **PROCEDE DE FABRICATION EN CONTINU D'UN REVETEMENT DE SOL AUTO-ADHESIF A PARTIR D'UN REVETEMENT DE SOL NON ADHESIF ET DISPOSITIF POUR LA MISE EN OEUVRE DE CE PROCEDE**
VERFAHREN ZUR KONTINUIERLICHEN HERSTELLUNG EINES SELBSTHAFTENDEN BODENBELAGS AUS EINEM HAFTFREIEN BODENBELAG UND VORRICHTUNG ZUR UMSETZUNG DES VERFAHRENS
METHOD FOR CONTINUOUSLY MANUFACTURING A SELF-ADHESIVE FLOOR COVERING FROM A NON-ADHESIVE FLOOR COVERING AND DEVICE FOR IMPLEMENTING SAID METHOD

(30) Priorité: 20.10.2009 FR 0957330
(43) Date de publication de la demande: 29.08.2012
(73) Titulaire: Gergonne Industrie, 01100 Oyonnax (FR)
(72) Inventeur: GERGONNE, Charles, F-01100 Arbent (FR); GERGONNE, Bertrand, F-01100 Arbent (FR)
(74) Mandataire: Cabinet Plasseraud
(86) Numéro de dépôt international: PCT/EP2010/065721
(87) Numéro de publication internationale: WO 2011/048095

(56) Documents cités:
- DE-A1- 19 959 988

## Description

### DOMAINE DE L'INVENTION

Le domaine de l'invention est celui de la fabrication de revêtements, en particulier de revêtements de sols ou muraux.

Plus précisément, l'invention concerne les phases finales de la fabrication de tels revêtements dans lesquelles il s'agit d'appliquer en continu un film de colle et un film protecteur, sur la face inférieure (envers) de ces revêtements destinés à être fixés sur un support (un sol ou un mur), de manière à obtenir un revêtement auto-adhésif à partir du revêtement non adhésif.

L'invention vise ainsi un procédé pour rendre auto-adhésif en continu un lé de revêtement, de préférence un revêtement de sol et ce, sur la pleine largeur du lé, sans bavure d'adhésif sur la tranche (adhésivage).

L'invention vise également un dispositif pour la mise en oeuvre de ce procédé.

Dans tout le présent exposé, tout singulier devra être également compris comme désignant un pluriel.

### ARRIERE-PLAN TECHNOLOGIQUE

Pour la description du revêtement, de préférence du revêtement de sol, il est précisé que:
- "face supérieure" du revêtement désigne indifféremment la face endroit ou la face apparente, une fois le revêtement de sol posé et fixé ;
- "face inférieure" ou "face envers" correspond à la face destinée à être en contact avec le support, de préférence fixé à celui-ci (e.g. sol), le plus souvent au moyen d'un adhésif.

Les revêtements concernés par l'invention sont, de préférence, des revêtements de sol soumis à de très grandes contraintes d'usure, comme c'est le cas des revêtements de sols pour des bâtiments publics, pour des terrains de sport ou pour des moyens de transport du type bus, cars, trains, tramways, métros, avions, bateaux, voire pour l'ameublement.

Par ailleurs, les revêtements de sol plus spécialement visés sont ceux réalisés à l'échelle industrielle sous forme de lés mis sous forme de rouleaux pour le stockage avant la pose. Ce sont par exemple des revêtements de sols multi-couches constitués d'une structure de base ou couche supérieure d'usure formée par une matrice thermoplastique pouvant inclure une charge granuleuse pour l'amélioration de la résistance au frottement. La couche d'usure comprend usuellement une sous-couche textile et éventuellement des couches intermédiaires de renfort susceptibles d'être constituées par des grilles de verre et/ou des membranes polymères. La sous-couche peut également être une mousse polymère ou un composite fibreux non tissé.

La face supérieure ou apparente peut être recouverte d'une couche de finition conférant à l'ensemble des propriétés spécifiques telles que la résistance mécanique, la résistance aux UV, la tenue à l'encrassement, à la rayure (à l'abrasion), au trafic, ...

Ces revêtements de sol sont fabriqués en continu par différentes techniques telles que l'enduction, le calandrage, le pressage ou l'extrusion.

Aujourd'hui, pour des raisons d'hygiène et de sécurité, les fabricants de revêtements de sol, sont contraints de développer des produits qui puissent être fixés au sol par les poseurs, sans employer les colles classiques, à savoir les colles polychloroprène (néoprène®). En effet, ces colles sont des produits toxiques, notamment par les composés organiques volatils (COV) qu'elles contiennent, mais ce sont également des produits dangereux en raison de leur grande inflammabilité et de leur caractère explosif.

Dans ce contexte, les revêtements, en particulier de sol, auto-adhésifs, c'est-à-dire préencollés sur leur face inférieure (envers ou côté sol) d'un film adhésif protégé par une feuille siliconée non adhésive, ont vocation à être de plus en plus utilisés voire même à terme à remplacer les revêtements, en particulier de sol, fixés à l'aide de colles néoprène®. On connaît ainsi des revêtements de sol, par exemple en polychlorure de vinyle (PVC), en linoléum, en caoutchouc, auto-adhésifs et préencollés en continu sur leur face inférieure d'un film adhésif acrylique.

Du fait des contraintes techniques & économiques imposées par le contre-collage en continu d'un tel film adhésif, ce dernier n'affleure pas sur les bords longitudinaux des lés de revêtements de sol auto-adhésifs. Ces lés présentent donc sur leur face inférieure deux lisières sans colle sur leurs bords longitudinaux. Ces lisières sans colle sont un inconvénient certain puisqu'elles empêchent un collage complet de ces revêtements de sol, sauf à recourir lors de la pose à ces colles néoprène indésirables pour recouvrir ces zones sans colle. Ces lisières sans colle sont d'autant plus gênantes qu'elles se situent de part et d'autre des joints entre les différents lés posés et fixés côte à côte sur le support à revêtir, en particulier le sol.

Des tentatives de contre-collage de film adhésif sur des lés de revêtements, en particulier de sol, de manière à supprimer ces lisières sans colle, ont été effectuées. Mais dans un contre-collage en continu, il est quasiment impossible de faire coïncider exactement le bord du film adhésif avec le bord du lé de revêtement. Aussi, pour éviter toute lisière sans colle, le film adhésif déborde très légèrement, ce qui génère des bavures sur la tranche du revêtement. Ces dernières sont non seulement gênantes pour l'aspect, mais posent également un problème lors de l'opération de jointoiement à chaud des lés de revêtements dès lors que ceux-ci sont posés et fixés sur le support (sol). En effet, ces bavures empêchent la fixation correcte du joint de soudure entre deux lés disposés bord à bord.

Naturellement, il est toujours possible d'éviter la formation de bavures en découpant en continu les bords des lés préencollés, mais il est bien évident que cet ébavurage en continu grève lourdement le prix de revient du procédé d'adhésivage, en particulier pour des revêtements de sol qui sont déjà en eux-mêmes des produits relativement sophistiqués à hautes propriétés mécaniques (résistance à l'abrasion), qui sont coûteux et qui ne sont pas forcément faciles à découper. A titre d'exemple, le document DE 199 59 988 A1 décrit un procédé de fabrication d'un revêtement auto-adhésif dans lequel un support non-adhésif est recouvert d'un film de colle puis appliqué sur la face inférieure d'un lé de revêtement de sol. Lorsque le support est retiré juste avant la pose du lé de revêtement sur le sol à recouvrir, le film de colle a été transféré sur le lé de revêtement et rend ainsi ce dernier auto-adhésif.

### PROBLEME TECHNIQUE - OBJECTIFS

Dans ce contexte, la présente invention vise à remédier aux inconvénients de l'art antérieur en fournissant un procédé d'adhésivage en continu d'un revêtement (de préférence un revêtement de sol) auto-adhésif, à partir d'un revêtement non adhésif, qui satisfasse à au moins l'un des objectifs suivants :
1. obtention en continu dans un processus industriel d'un lé de revêtement auto-adhésif, dans lequel le film adhésif vient à ras de la tranche de revêtement sur les deux bords longitudinaux du lé, sans formation de bavure sur ces tranches ;
2. mise en oeuvre aisée du procédé d'adhésivage en continu avec un coût de revient limité ;
3. production de lés de revêtement aisément et correctement soudables bord à bord une fois posés et fixés sur le support, par exemple le sol, à l'aide de moyens de soudure faisant intervenir un cordon de soudure destiné à former un joint ;
4. obtention de lés de revêtement (par exemple de sol) auto-adhésifs se présentant sous la forme de rouleaux dans lesquels le film adhésif est protégé par un film protecteur auto-adhésif, aisément retirable lors de la pose ;

La présente invention vise également à fournir un dispositif ou une installation pour la mise en oeuvre d'un procédé d'adhésivage, par exemple du type de celui défini dans les objectifs énoncés ci-dessus.

### BREVE DESCRIPTION DE L'INVENTION

Les objectifs susvisés, parmi d'autres, sont atteints par la présente invention qui concerne en premier lieu un procédé d'adhésivage en continu d'un revêtement, de préférence un revêtement de sol, auto-adhésif, à partir d'un revêtement non adhésif consistant :
a/ à contre-coller sur la face inférieure d'un lé de revêtement défilant en continu, un ruban adhésif de transfert comprenant un film de colle destiné à être fixé sur la face inférieure du lé de revêtement et un support protecteur non adhésif, la largeur du ruban adhésif de transfert étant supérieure à la largeur du lé de revêtement de manière à ce que le film de colle et son support protecteur débordent de chaque côté du lé de revêtement;
b/ à neutraliser les deux bordures longitudinales du film de colle de chaque côté du lé de revêtement, en les prenant chacune en sandwich entre le rebord longitudinal du support protecteur du ruban adhésif de transfert et des moyens de neutralisation en contact avec la bordure et venant à ras de la tranche du lé de revêtement;
c/ à éliminer ensuite les deux bordures du film de colle de façon à obtenir une rupture nette du film de colle à ras de la tranche du lé de revêtement.

Le revêtement, en particulier de sol, obtenu par mise en oeuvre du procédé selon l'invention est auto-adhésif, d'un coût de revient acceptable car produit en continu à cadence industrielle et, enfin, permettant une pose simple et rapide avec un jointoiement par soudure efficace des lés posés et fixés bord à bord sur le support, en particulier le sol.

Suivant un premier mode préféré de mise en oeuvre :
- dans l'étape b/, les moyens de neutralisation comprennent deux bandes, de préférence en papier ou en polymère (film ou mousse), par exemple un polymère thermoplastique, le bord longitudinal interne de chaque bande étant en appui ou à ras de la tranche du lé de revêtement;
- et dans l'étape c/, on procède au retrait des deux bandes de neutralisation, ce qui entraîne en même temps le retrait des deux bordures du film de colle.

Suivant une modalité avantageuse de ce premier mode préféré de mise en oeuvre
- dans l'étape c/, le retrait des deux bandes et des deux bordures du film de colle, est obtenu par retrait du support protecteur du ruban de transfert qui entraîne avec lui les bandes de neutralisation solidarisées aux rebords longitudinaux du support protecteur par l'intermédiaire des bordures longitudinales du film de colle,
- et il est prévu en outre une étape d/ consistant essentiellement à contre-coller sur le film de colle, un film protecteur de largeur supérieure au lé de revêtement.

Il est peut être intéressant suivant l'invention que la bande en papier ou de préférence en polymère (film ou mousse) constituant un moyen de neutralisation, ait une épaisseur correspondant sensiblement à l'épaisseur du lé de revêtement. Cette caractéristique permet d'avoir un lé de revêtement ayant une même épaisseur sur toute sa largeur, ce qui peut faciliter son défilement (pas de saut) dans un dispositif d'adhésivage par contre-collage qui comporte usuellement des calandres avec un ou plusieurs jeux de cylindres/contre-cylindres.

Suivant une autre modalité avantageuse de ce premier mode préféré de mise en oeuvre relative à l'étape b/, les moyens de neutralisation comportent, en complément ou à la place des bandes de neutralisation, au moins un jeu de cylindres comprenant un cylindre et un contre-cylindre disposés bord à bord avec chaque tranche longitudinale du lé de revêtement, pour prendre en sandwich la bordure du film de colle dépassant de chaque côté du lé, avec le rebord du support protecteur.

Suivant un second mode de mise en oeuvre, il est prévu que, dans l'étape b/, les moyens de neutralisation, d'une part, comportent, de chaque côté du lé, au moins un jeu de cylindres incluant au moins un cylindre-presseur et au moins un contre-cylindre et, d'autre part, sont conçus pour inciser le film de colle au ras de chaque tranche longitudinale du lé de revêtement.

Avantageusement, chaque jeu de cylindre presseur/contre-cylindre ne déborde pas vers l'intérieur au-delà du rebord longitudinal du film protecteur du ruban adhésif de transfert, de sorte que chaque rebord et chaque bordure de film de colle correspondant puisse être incisé à l'aide d'un outil de coupe approprié.

Dans l'un ou l'autre de ces deux modes de mise en oeuvre, il est préférable que les moyens de neutralisation soient en contact avec chaque bordure du film de colle sur toute la largeur de ladite bordure.

Selon une autre disposition avantageuse de l'invention, le film de colle du ruban adhésif de transfert est coaxial et de largeur inférieur au support protecteur non adhésif.

S'agissant du revêtement (de sol) rendu auto-adhésif par le procédé selon l'invention, il comprend au moins une couche à base d'au moins un matériau de préférence choisi dans le groupe incluant :
- les (co)polymères, avantageusement le polychlorure de vinyle (PVC), les polyesters ou les caoutchoucs naturels ou synthétiques :
- les linoléums et
- les associations de ces matériaux.

Pour faciliter l'application du film d'adhésif sur la face envers du revêtement (de préférence de sol), il peut être souhaitable d'effectuer le contre-collage à chaud. A cette fin, on mettra alors en oeuvre une ou plusieurs calandres de contre-collage chauffée(s) de préférence à une température de l'ordre de 60-70°C.

Suivant une autre caractéristique de l'invention, le support protecteur non adhésif du ruban adhésif de transfert de l'étape a/ et le film protecteur de l'étape d/ sont de préférence formés par un film polymère, avantageusement en polypropylène, revêtu sur sa face destinée à être appliquée sur le film de colle, d'un revêtement antiadhésif, de préférence en silicone et en ce que le film de colle est à base d'acrylique.

Concernant la destination du revêtement de sol auto-adhésif obtenu par le procédé selon l'invention, il peut s'agir d'un revêtement de sol pour bus, cars, trains, tramways, métros, avions, bateaux, terrains de sport, bâtiments ou bien encore de revêtements pour l'ameublement.

L'invention vise en second lieu un dispositif, notamment pour la mise en oeuvre de ce procédé, ce dispositif étant caractérisé en ce qu'il comprend :
i. des moyens pour faire défiler en continu un lé de revêtement de sol non adhésif sur sa face inférieure destinée à être appliquée sur le sol ;
ii. des moyens pour faire défiler en continu un ruban adhésif de transfert comprenant un film de colle destiné à être fixé sur la face inférieure du lé de revêtement et un support protecteur non adhésif, la largeur du ruban adhésif de transfert étant supérieure à la largeur du lé de revêtement de manière à ce que le film de colle et son support protecteur débordent de chaque côté du lé de revêtement ;
iii. des moyens de neutralisation des deux bordures du film de colle de chaque côté du lé de revêtement, lesdits moyens comprenant de préférence deux bandes, avantageusement en papier ou en mousse polymère ;
iv. au moins une calandre de contre-collage du ruban adhésif de transfert sur la face inférieure et, de préférence, de contre-collage de deux bandes de neutralisation des deux bordures du film de colle de chaque côté du lé de revêtement ;
v. au moins une calandre d'aide au retrait des deux bordures du film de colle et des deux bandes de neutralisation, et éventuellement du film protecteur du ruban de transfert;
vi. éventuellement des moyens pour faire défiler en continu un film protecteur de largeur supérieure au lé de revêtement);
vii. et éventuellement au moins une calandre de contre-collage du film protecteur sur la face inférieure du lé de revêtement revêtue du film de colle venant à ras des tranches du revêtement adhésif.

### DESCRIPTION DETAILLEE DE L'INVENTION

On décrit ci-après un exemple préféré de réalisation du dispositif d'adhésivage en continu d'un revêtement de sol, en référence aux dessins annexés dans lesquels :
- la figure 1 est une vue schématique en perspective de dessus dudit dispositif dans laquelle le départ de la chaîne d'adhésivage est au premier plan ;
- la figure 2 est une vue en perspective de dessous dudit dispositif dans laquelle le départ de la chaîne d'adhésivage est au premier plan, cette chaîne comprenant 4 zones (IV, V, VI, VII);
- la figure 3 est une vue en perspective dudit dispositif dans laquelle la fin de la chaîne d'adhésivage est au premier plan ;
- la figure 3a est une vue de détail (loupe a) de la figure 3;
- la figure 4A est une vue de détail de la zone IV de la figure 2;
- la figure 5A est une vue de détail de la zone V de la figure 2;
- la figure 5B est une vue en coupe transversale droite selon la ligne de coupe B/B de la figure 5A;
- la figure 5C est une vue en coupe transversale droite selon la ligne de coupe C/C de la figure 5A;
- la figure 6A est une vue de détail de la zone VI de la figure 2;
- la figure 6D est une vue en coupe transversale droite selon la ligne de coupe D/D de la figure 6A;
- la figure 7A est une vue de détail de la zone VII de la figure 2 ;
- la figure 7E est une vue en coupe transversale droite selon la ligne E/E de la figure 7A.

A cette description d'un exemple préféré de réalisation du dispositif d'adhésivage, succède, également à titre d'exemple, un exposé d'un mode préféré de mise en oeuvre du procédé d'adhésivage selon l'invention à l'aide du susdit dispositif.

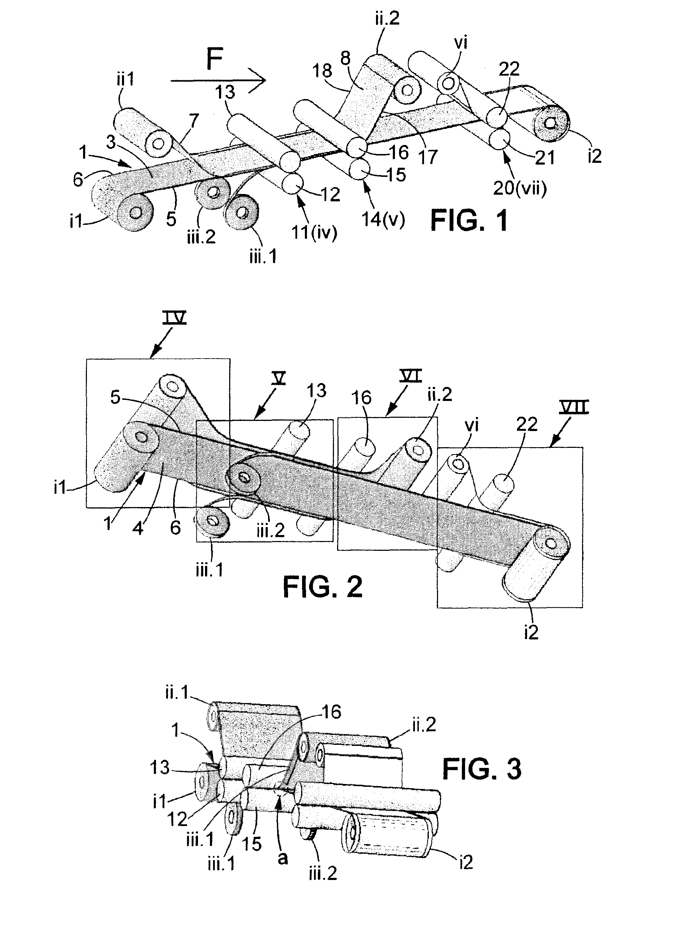

Le dispositif (ou l'installation) de défilement schématisé dans son ensemble sur les figures 1 à 3 est une chaîne destinée à l'adhésivage d'un revêtement de sol 1 par application ou dépose en continu d'un film d'adhésif 2 sur la face inférieure (ou envers) 3 dudit revêtement 1. La flèche F de la figure 1 indique le sens de défilement du lé de revêtement 1.

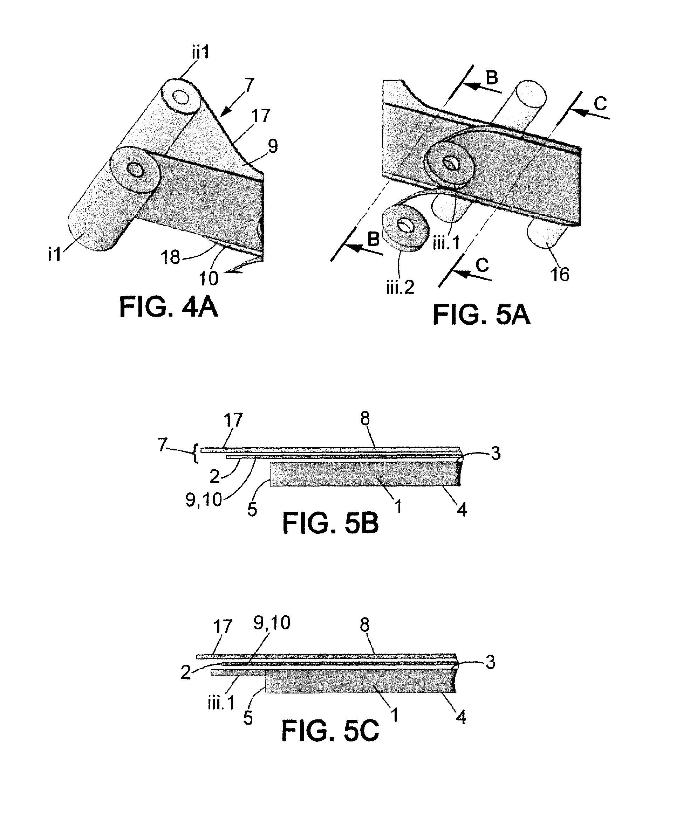

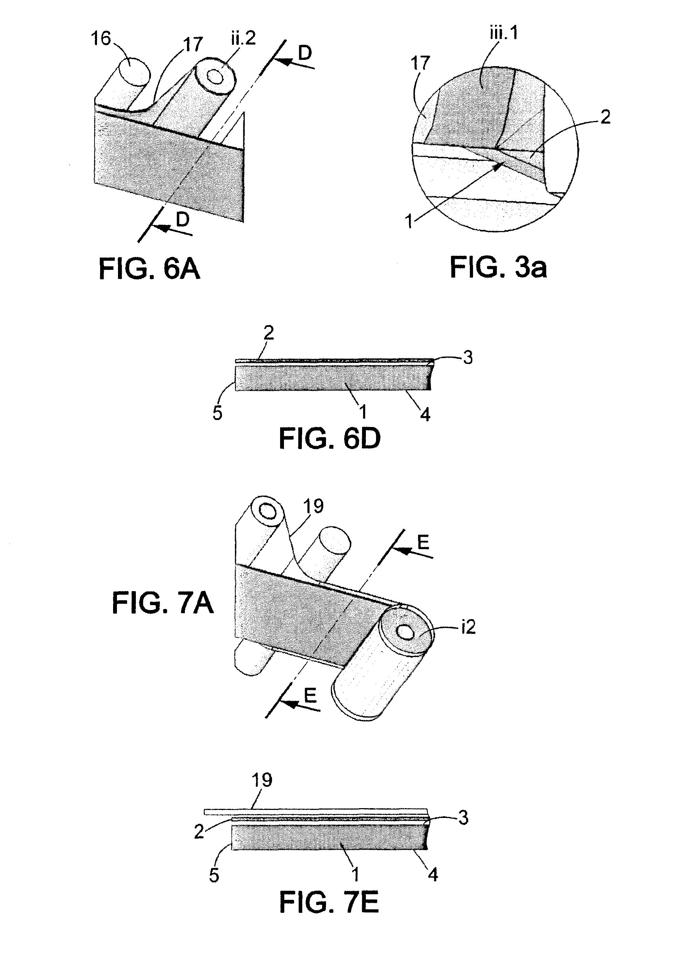

Comme montré plus en détail sur les figures 5B, 5C, 6D, 7E, le revêtement de sol 1 présente également une face supérieure 4 apparente une fois le revêtement de sol posé. Cette face apparente supérieure (endroit) 4 apparaît sur le bas de toutes les figures. Le revêtement de sol 1 a deux tranches 5 et 6 longitudinales à l'aplomb desquelles les bords du film adhésif 2 doivent être au terme du procédé d"adhésivage selon l'invention (figure 6D).

Le dispositif d'adhésivage proprement dit comprend (Zone IV) des moyens i de défilement en continu du lé de revêtement 1 comportant un rouleau d'alimentation i.1 en revêtement 1 non adhésif disposé à l'entrée de la chaine d'adhésivage et un rouleau i.2 de revêtement 1 auto-adhésif disposé en sortie de la chaine d'adhésivage selon l'invention. Ce rouleau 1.2 des dessins est obtenu par enroulement du revêtement 1 auto-adhésif dans le sens horaire. Naturellement, il est possible de prévoir un enroulement dans le sens antihoraire, de sorte que la face supérieure, apparente 4 une fois le revêtement 1 posé, soit à l'extérieur de ce rouleau i.2 et donc visible. L'un et/ou et l'autre de ces rouleaux i.1 et i.2 est (sont) entrainable(s) en rotation par des organes adaptés non représentés sur les dessins.

Le dispositif inclut également (zone IV) des moyens ii pour faire défiler en continu un ruban adhésif de transfert 7 qui est un bicouche formé par le film adhésif 2 et un support protecteur non adhésif 8 constitué, par exemple, par un film polymère en polypropylène revêtu, au moins sur sa face destinée à être appliquée sur le film de colle 2, d'un revêtement anti-adhésif, de préférence en silicone.

Ces moyens de défilement ii comprennent un rouleau d'alimentation ii.1 en ruban adhésif de transfert 7 et un rouleau de sortie ii.2. Le rouleau d'entrée ii.1 et/ou le rouleau de sortie ii.2 est/sont entrainable(s) en rotation par des organes adaptés non représentés sur les dessins. A titre d'exemple, le ruban adhésif de transfert 7 peut être un adhésif de transfert formulé à base de colle acrylique du type de celui commercialisé par la société GPI GERGONNE sous la dénomination ADH TRANS 5826 150G/PP 60MU BL.

Le dispositif d'adhésivage représenté sur les dessins est également doté (zone V) de moyens de neutralisation iii des bordures 9 et 10 du film de colle 2 de chaque côté du lé de revêtement 1. Ces moyens iii sont constitués, par exemple, de deux bandes iii.1 et iii.2 en papier ou en polymère (film ou mousse) d'épaisseur correspondant sensiblement à l'épaisseur du lé de revêtement. Dans l'exemple représenté sur les dessins, les bandes de neutralisation iii.1 et iii.2 sont en papier et sont fournies par des rouleaux d'alimentation qui permettent le défilement des bandes par entrainement dû aux éléments de la chaîne en aval et/ou grâce à des organes d'entrainement équipant ces rouleaux en eux-mêmes et non représentes sur les dessins.

Le dispositif (ou l'installation) d'adhésivage montré sur les figures 1 à 3 comportent également (zone V) une calandre 11(iv) de contre-collage du ruban adhésif de transfert 7 et de contre-collage des deux bandes de neutralisation iii.1 et iii.2 sur la face inférieure 3 du revêtement 1. Cette calandre 11(iv) est constituée par un jeu de deux cylindres inférieur 12 (non représenté sur la figure 2) et supérieur 13 dans l'entrefer desquels défile le tricouche formé par le *revêtement 1 et ses deux bandes de neutralisation iii.1 et iii.2*/ *le film de colle 2* / *et le film protecteur 8,* comme montré sur la figure 5C.

En aval de la calandre 11(iv), la chaine d'adhésivage du dispositif selon l'invention comprend (zone VI) une autre calandre 14(v) formée par un jeu de cylindres inférieur 15 (non représenté sur la figure 2) et supérieur 16. Cette calandre 14(v) est une calandre d'aide au retrait du film protecteur 8 du ruban de transfert 7, des deux bordures longitudinales du film de colle 2 et des bandes (iii.1 et iii.2) de neutralisation de chaque côté du lé de revêtement 1. Le tricouche montré à la figure 5C défile dans l'entrefer des cylindres 15 et 16 de la calandre 14(v) et, au sortir de cette calandre, le film protecteur 8 revêtu sur ses rebords longitudinaux 17 et 18 des bandes de neutralisation iii.1 et iii.2, est recueilli sur le rouleau de sortie ii.2 des moyens de défilement ii.

Dans la zone VII de la chaine du dispositif d'adhésivage montré sur la figure 2 apparaissent (Fig 7A):
- des moyens vi pour faire défiler en continu un film protecteur 19 de largeur supérieure au lé de revêtement 1 ;
- et, en aval desdits moyens vi, une calandre 20(vii) de contre-collage du film protecteur 19 sur la face inférieure envers 3 du lé de revêtement 1 revêtue du film de colle 2 venant à ras des tranches 5, 6 du revêtement 1 désormais autoadhésif.

Les moyens de défilement vi du film protecteur 19 sont en l'espèce constitués par un rouleau vi d'alimentation en film protecteur 19. Ce rouleau vi peut éventuellement être entrainable en rotation par des organes non représentés sur le dessin. En tout état de cause, le défilement du film protecteur 19, c'est-à-dire le déroulement du rouleau vi peut résulter de l'entrainement induit par des éléments disposés en aval tels que la calandre 20(vii), le rouleau de sortie (i.2) du revêtement 1 adhésif ou bien encore par le lé de revêtement 1 défilant en continu. Le film protecteur 19 déborde de chaque côté du revêtement 1 ce qui facilite sa préhension et donc sa manipulation (figure 7E).

La calandre 20(vii) est constituée par un jeu de cylindres inférieur 21 (non représenté sur la figure 2) et supérieur 22 dans l'entrefer desquels défile le tricouche montré sur la figure 7E et comprenant le *revêtement de sol 1*/*film adhésif 2 venant à ras des tranches 5 et 6 longitudinales dudit revêtement 1*/*film protecteur 19.* Ce tri-couche 1/2/19 vient s'enrouler en fin de chaine sur les moyens de défilement ou rouleau. (i.2), qui permettent de recueillir le film auto-adhésif 1 protégé par le film 19, débordant de part et d'autre des tranches longitudinales 5 et 6 dudit revêtement 1.

Dans cet exemple, le fïlm protecteur 19 est, tout comme le support protecteur 8, un film polymère en polypropylène rendu anti-adhésif à l'aide d'un revêtement en silicone.

Les rouleaux ii.1, ii.2, iii.1, iii.2 & vi ont ceci en commun d'avoir un axe transversal et d'être décalés par rapport au plan du lé de revêtement 1. Les rouleaux ii.1, ii.2 & vi sont déportés côté face inférieure 3 et les rouleaux iii.1 & iii.2 côté face supérieure 4.

Pour illustrer le fonctionnement du dispositif d'adhésivage selon l'invention décrite ci-dessus et représenté sur les dessins, on donne ci-après un exemple préféré de mise en oeuvre du procédé selon l'invention.

Ce procédé permet de contre-coller un film de colle 2 et un film protecteur 19 sur la face inférieure envers 3 d'un revêtement, par exemple de sol, qui peut être en PVC, en linoléum, en caoutchouc, entre autres. Il peut s'agir par exemple de revêtements de sols pour bus, cars, trains, tramways, métros, avions, bateaux, bâtiments, terrains sportifs, ou de revêtements pour l'ameublement.

### Etape a/

Comme montré sur les dessins et en particulier sur la zone IV de la figure 2 et sur la figures 4A et 5B, l'étape a/ du procédé d'adhésivage consiste à contre-coller sur la face inférieure 3 du lé de revêtement 1 défilant en continu à partir du rouleau i.1 de lés de revêtement 1, le ruban adhésif de transfert 7 dont le film de colle 2 est fixé sur la face inférieure envers3 du lé de revêtement 1. Le ruban adhésif de transfert 7 défile en continu à partir du rouleau ii.1 Ce contre-collage de l'étape a/ conduit au tricouche du *revêtement 1*/*film de colle 2*/*film protecteur 8* de la figure 5B.

### Etape b/

Dans l'étape b/ illustrée plus spécifiquement sur la zone V de la figure 2 et sur la figure 5A, les deux bandes de neutralisation iii.1 et iii.2 sont collées sur les deux bordures 9 et 10 du film de colle 2 de chaque côté du lé de revêtement 1. Les bandes de neutralisation iii.1 et iii.2 défilent en continu à partir de deux rouleaux d'alimentation ou moyens de neutralisation iii.1 et iii.2 sur les figures 1, 2, 3 et 5A.

Comme montré sur la figure 5C, chaque bande de neutralisation iii.1 et iii.2 est en appui par son bord longitudinal interne sur la tranche 5, 6 du revêtement 1 (bord à bord). Ainsi, les bordures 9 et 10 du film de colle 2 sont en quelque sorte prises en sandwich entre les rebords 17, 18 du support protecteur 8 du ruban adhésif de transfert 7.

Le contre-collage du ruban adhésif de transfert 7 de l'étape a/ et des bandes de neutralisation iii.1 et iii.2 de l'étape b/ est réalisé au moyen de la calandre 11(iv) tandis que la calandre 14(v) concourt au retrait du film protecteur 8, des bordures de colle 9, 10 et des bandes de neutralisation iii.1 et iii.2 par enroulement autour du rouleau ii.2.

### Etape c/

Dans cette étape montrée plus spécialement sur la zone VI de la figure 2 et sur les figures 6A et 6Aa, on procède au retrait du support protecteur 8 du ruban adhésif de transfert 7, ce qui entraîne le retrait des bandes de neutralisation iii.1 et iii.2 solidarisées au support protecteur 8, de même que des bordures longitudinales 9 et 10 du film de colle 2 au ras des tranches 5 et 6 du lé de revêtement 1. On retire ainsi dans la même opération le protecteur de l'adhésif et les deux bandes de papier, ce qui permet une rupture nette et sans bavure du film de colle au ras des tranches 5 et 6 du revêtement 1. Cela apparaît précisément sur la figure 6Aa.

### Etape d/

Cette étape d/ montrée plus spécialement sur la zone VII de la figure 2 et sur la figure 7A, consiste au contre-collage du film protecteur 19 sur le film de colle 2 à l'aide de la calandre 20, ledit film protecteur 19 défilant en continu à partir du rouleau d'alimentation (vi). Ainsi, le bicouche *lé de revêtement 1*/*film de colle 2* (figure 6D) obtenu après l'étape de retrait devient-t-il un tricouche *revêtement 1*/*film de colle 2*/*film protecteur 19* au sortir de la calandre 20(vii) pour ensuite venir former le rouleau de sortie i.2 de revêtement de sol auto-adhésif 1.

Ce procédé d'adhésivage d'un lé de revêtement de sol pleine largeur permet d'obtenir en continu, à cadence industrielle, de manière économique, un revêtement de sol auto-adhésif dont le film de colle vient à ras des tranches longitudinales du lé sans bavure sur ces tranches et avec un film protecteur débordant de chaque côté du lé pour faciliter sa préhension et sa manipulation.

Selon un deuxième mode de réalisation subsidiaire non représenté, les moyens de neutralisation iii.1 et iii.2 sont constitués par au moins une calandre disposée de chaque côté du lé de revêtement 1 et comprenant au moins un jeu d'un cylindre presseur et d'un contre-cylindre disposés de manière à prendre en sandwich les bordures 9, 10 du film de colle 2 et les rebords 17, 18 du support protecteur 8. Ce mode de réalisation comporte également des moyens d'incision disposés en aval de chacun de ces jeux de cylindres pour découper les bordures 9 10) et les rebords 17,18 au ras des tranches 5 et 6 du lé de revêtement 1. On obtient ainsi un bicouche tel que représenté sur la figure 6D qui est revêtu non pas du film protecteur 19, comme montré sur la figure 7E, mais du support protecteur 8 qui n'a pas été retiré.

## Revendications

1. Procédé d'adhésivage en continu d'un revêtement (1), de préférence un revêtement de sol, auto-adhésif, à partir d'un revêtement (1) non adhésif consistant :
a/ à contre-coller sur la face inférieure (3) d'un lé de revêtement (1) défilant en continu, un ruban adhésif de transfert (7) comprenant un film de colle (2) destiné à être fixé sur la face inférieure (3) du lé de revêtement (1) et un support (8) protecteur non adhésif, la largeur du ruban adhésif (7) de transfert étant supérieure à la largeur du lé de revêtement (1) de manière à ce que le film de colle (2) et son support protecteur (8) débordent de chaque côté du lé de revêtement (1) ;
b/ à neutraliser les deux bordures longitudinales (9,10) du film de colle (2) de chaque côté du lé de revêtement (1), en les prenant chacune en sandwich entre le rebord longitudinal (17,18) du support protecteur (8) du ruban (7) adhésif de transfert et des moyens de neutralisation (iii.1,iii.2) en contact avec la bordure et venant à ras de la tranche (5,6) du lé de revêtement (1);
c/ à éliminer ensuite les deux bordures (9,10) du film de colle (2) de façon à obtenir une rupture nette du film de colle (2) à ras de la tranche (5,6) du lé de revêtement (1).

2. Procédé selon la revendication 1, **caractérisé en ce que**:
- dans l'étape b/, les moyens de neutralisation (iii) comprennent deux bandes (iii.1, iii.2), de préférence en papier ou en mousse polymère, le bord longitudinal interne de chaque bande (iii.1, iii.2) étant en appui ou à ras de la tranche (5,6) du lé de revêtement (1) ;
- et dans l'étape c/, on procède au retrait des deux bandes de neutralisation (iii.1, iii.2) ce qui entraîne en même temps le retrait des deux bordures (9,10) du film de colle (2).

3. Procédé selon la revendication 2, **caractérisé en ce que** dans l'étape c/, le retrait des deux bandes (iii.1, iii.2) et des deux bordures (9,10) du film de colle (2), est obtenu par retrait du support protecteur (8) du ruban de transfert (7) qui entraîne avec lui les bandes de neutralisation (iii.1, iii.2) solidarisées aux rebords longitudinaux (17,18) du support protecteur (8) par l'intermédiaire des bordures (9,10) longitudinales du film de colle (2).

4. Procédé selon la revendication 3, **caractérisé en ce qu'**il comporte en outre une étape d/ consistant essentiellement à contre-coller sur le film de colle (2), un film protecteur (19) de largeur supérieure au lé de revêtement (1).

5. Procédé selon l'une au moins des revendications 2 à 4, **caractérisé en ce que**, dans l'étape b/, les moyens de neutralisation (iii) comportent, en complément ou à la place des bandes de neutralisation (iii.1, iii.2), au moins un jeu de cylindres (12,13) comprenant un cylindre (12) et un contre-cylindre (13) disposés bord à bord avec chaque tranche (5,6) longitudinale du lé de revêtement (1) pour prendre en sandwich la bordure du film de colle (2) dépassant de chaque côté du lé, avec le rebord (17,18) du support protecteur (8).

6. Procédé selon la revendication 1, **caractérisé en ce que**, dans l'étape b/, les moyens de neutralisation (iii.1, iii.2), d'une part, comportent, de chaque côté du lé, au moins un jeu de cylindres incluant au moins un cylindre-presseur et au moins un contre-cylindre et, d'autre part, sont conçus pour inciser le film de colle (2) au ras de chaque tranche (5,6) longitudinale du lé de revêtement (1).

7. Procédé selon l'une au moins des revendications précédentes, **caractérisé en ce que** le revêtement (1) comprend au moins une couche à base d'au moins un matériau de préférence choisi dans le groupe incluant :
- les (co)polymères, avantageusement le polychlorure de vinyle (PVC), les polyesters ou les caoutchoucs naturels ou synthétiques ;
- les linoléums ;
- et les associations de ces matériaux.

8. Procédé selon l'une au moins des revendications précédentes, **caractérisé en ce que** le contre-collage du film d'adhésif est effectué à chaud, de préférence à une température de l'ordre 60-70°C.

9. Procédé selon l'une au moins des revendications précédentes, **caractérisé en ce que** le support protecteur (8) non adhésif du ruban adhésif (7) de transfert de l'étape a/ et le film protecteur (19) de l'étape d/ sont de préférence formés par un film polymère, avantageusement en polypropylène, revêtu sur sa face destinée à être appliquée sur le film de colle, d'un revêtement anti-adhésif, de préférence en silicone, et **en ce que** le film de colle (2) est à base d'acrylique.

10. Procédé selon l'une au moins des revendications précédentes, **caractérisé en ce que** le revêtement (1) est un revêtement de sol pour bus, cars, trains, tramways, métros, avions, ou bateaux, pour sols de bâtiments, pour sols sportifs, ou encore pour l'ameublement.

11. Dispositif pour la mise en oeuvre du procédé selon l'une quelconque des revendications 1 à 10, **caractérisé en ce qu'**il comprend:
i. des moyens pour faire défiler en continu un lé de revêtement (1) de sol non adhésif sur sa face inférieure (3) destinée à être appliquée sur le sol ;
ii. des moyens pour faire défiler en continu un ruban adhésif de transfert (7) comprenant un film de colle (2) destiné à être fixé sur la face inférieure (3) du lé de revêtement (1) et un support protecteur (8) non adhésif, la largeur du ruban adhésif (7) de transfert étant supérieure à la largeur du lé de revêtement (1) de manière à ce que le film de colle (2) et son support protecteur (8) débordent de chaque côté du lé de revêtement (1);
iii. des moyens de neutralisation des deux bordures (9,10) du film de colle (2) de chaque côté du lé de revêtement (1), lesdits moyens comprenant de préférence deux bandes (iii.1, iii.2), avantageusement en papier ou en mousse polymère ;
iv. au moins une calandre (11) de contre-collage du ruban adhésif de transfert (7) sur la face inférieure (3) et, de préférence, de contre-collage de deux bandes de neutralisation (iii.1,iii.2) des deux bordures (9,10) du film de colle (2) de chaque côté du lé de revêtement (1) ;
v. au moins une calandre (14) d'aide au retrait des deux bordures (9,10) du film de colle (2) et des deux bandes de neutralisation (iii.1,iii.2) et éventuellement du film protecteur (8) du ruban de transfert (7);
vi. éventuellement des moyens pour faire défiler en continu un film protecteur (19) de largeur supérieure au lé de revêtement (1);
vii. et éventuellement au moins une calandre (20) de contre-collage du film protecteur (19) sur la face inferieure (3) du lé de revêtement (1) revêtue du film de colle (2) venant à ras des tranches (5,6) du revêtement adhésif (1).

12. Procédé de revêtement d'un support, en particulier d'un sol, comprenant les étapes consistant à :
- mettre en oeuvre le procédé d'adhésivage selon l'une au moins des revendications 1 à 10, de manière à obtenir un revêtement (1) comprenant un lé de revêtement et un ruban adhésif de transfert (7) sur la face inférieure (3) du lé de revêtement (1), le ruban adhésif de transfert (7) comprenant un film de colle (2) fixé sur la face inférieure (3) du lé de revêtement (1) et venant à ras de la tranche (5, 6) du lé de revêtement (1), et un support protecteur (8),
- retirer le support protecteur (8) ou, le cas échéant, le film protecteur (19),
- fixer le revêtement (1) sur le support par l'intermédiaire du film de colle (2).

## Patentansprüche

1. Verfahren zum kontinuierlichen Haftendmachen eines Belags (1), vorzugsweise eines selbsthaftenden Bodenbelags, aus einem nicht haftenden Belag (1), darin bestehend:
a/ auf die Unterseite (3) eine Bahn eines Belags (1), der kontinuierlich abläuft, ein Transferklebeband (7), umfassend eine Klebstoffschicht (2), die dazu bestimmt ist, auf der Unterseite (3) der Belagsbahn (1) befestigt zu werden, und einen nicht haftenden Schutzträger (8) aufzukaschieren, wobei die Breite des Transferklebebandes (7) größer als die Breite der Belagsbahn (1) ist, so dass die Klebstoffschicht (2) und ihr Schutzträger (8) über jede Seite der Belagsbahn (1) hinausragen;
b/ die beiden Längsränder (9, 10) der Klebstoffschicht (2) auf jeder Seite der Belagsbahn (1) zu neutralisieren, wobei sie jeweils zwischen dem Längsrand (17, 18) des Schutzträgers (8) des Transferklebebandes (7) und der Neutralisierungsmitteln (iii.1, iii.2), die mit dem Rand in Kontakt sind und auf Höhe des Abschnitts (5, 6) der Belagsbahn (1) gelangen, eingeklemmt werden;
c/ sodann die beiden Ränder (9, 10) der Klebstoffschicht (2) zu beseitigen, um eine deutliche Bruchlinie der Klebstoffschicht (2) auf Höhe des Abschnitts (5, 6) der Belagsbahn (1) zu erhalten.

2. Verfahren nach Anspruch 1, **dadurch gekennzeichnet, dass**
- in Schritt b/ die Neutralisierungsmittel (iii) zwei Streifen (iii.1, iii.2), vorzugsweise aus Papier oder Polymerschaum, umfassen, wobei der Längsinnenrand jedes Streifens (iii.1, iii.2) auf dem Abschnitt (5, 6) der Belagsbahn (1) aufliegend oder auf dessen Höhe angeordnet ist;
- und in Schritt c/ das Herausziehen der beiden Neutralisierungsstreifen (iii.1, iii.2) vorgenommen wird, was gleichzeitig zum Herausziehen der beiden Ränder (9, 10) der Klebstoffschicht (2) führt.

3. Verfahren nach Anspruch 2, **dadurch gekennzeichnet, dass** in Schritt c/ das Herausziehen der beiden Streifen (iii.1, iii.2) und der beiden Ränder (9, 10) der Klebstoffschicht (2) durch Herausziehen des Schutzträgers (8) des Transferbandes (7) erzielt wird, das die Neutralisierungsstreifen (iii.1, iii.2), die mit den Längsrändern (17, 18) des Schutzträgers (8) über die Längsränder (9, 10) der Klebstoffschicht (2) verbunden sind, mitnimmt.

4. Verfahren nach Anspruch 3, **dadurch gekennzeichnet, dass** es ferner einen Schritt d/ umfasst, der im Wesentlichen darin besteht, auf die Klebstoffschicht (2) eine Schutzfolie (19) von größerer Breite als die Belagsbahn (1) aufzukaschieren.

5. Verfahren nach mindestens einem der Ansprüche 2 bis 4, **dadurch gekennzeichnet, dass** in Schritt b/ die Neutralisierungsmittel (iii) zusätzlich zu oder statt den Neutralisierungsstreifen (iii.1, iii.2) mindestens einen Zylindersatz (12, 13) aufweisen, umfassend einen Zylinder (12) und einen Gegenzylinder (13), die Seite an Seite mit jedem Längsabschnitt (5, 6) der Belagsbahn (1) angeordnet sind, um den Rand der Klebstoffschicht (2), der über jede Seite der Bahn hinausragt, mit dem Rand (17, 18) des Schutzträgers (8) einzuklemmen.

6. Verfahren nach Anspruch 1, **dadurch gekennzeichnet, dass** in Schritt b/ die Neutralisierungsmittel (iii.1, iii.2) einerseits auf jeder Seite der Bahn mindestens einen Zylindersatz, der mindestens einen Druckzylinder und mindestens einen Gegenzylinder einschließt, umfassen, und andererseits derart ausgeführt sind, dass sie die Klebstoffschicht (2) auf Höhe jedes Längsabschnitts (5, 6) der Belagsbahn (1) einschneiden.

7. Verfahren nach mindestens einem der vorhergehenden Ansprüche, **dadurch gekennzeichnet, dass** der Belag (1) mindestens eine Schicht auf Basis mindestens eines Materials umfasst, das vorzugsweise in der Gruppe ausgewählt wird, umfassend:
- die (Co)polymere, vorteilhafterweise Polyvinylchlorid (PVC), die Polyester oder natürlichen oder synthetischen Kautschuke;
- die Linoleummaterialien;
- und die Verbindungen dieser Materialien.

8. Verfahren nach mindestens einem der vorhergehenden Ansprüche, **dadurch gekennzeichnet, dass** das Kaschieren der Klebstoffschicht heiß erfolgt, vorzugsweise bei einer Temperatur von ungefähr 60-70 °C.

9. Verfahren nach mindestens einem der vorhergehenden Ansprüche, **dadurch gekennzeichnet, dass** der nicht haftende Schutzträger (8) des Transferklebebandes (7) aus Schritt a/ und die Schutzfolie (19) aus Schritt d/ vorzugsweise von einer Polymerfolie, vorteilhafterweise einer Polypropylenfolie, gebildet sind, die auf ihrer Seite, die dazu bestimmt ist, an die Klebstoffschicht angelegt zu werden, mit einer Antihaftverkleidung, vorzugsweise aus Silikon, überzogen ist, und dass die Klebstoffschicht (2) auf Acrylbasis ist.

10. Verfahren nach mindestens einem der vorhergehenden Ansprüche, **dadurch gekennzeichnet, dass** der Belag (1) ein Bodenbelag für Busse, Autos, Züge, Straßenbahnen, U-Bahnen, Flugzeuge oder Boote, für Böden von Gebäuden, Sportböden oder auch für Möbel ist.

11. Vorrichtung für den Einsatz des Verfahrens nach einem der Ansprüche 1 bis 10, **dadurch gekennzeichnet, dass** sie umfasst:
i. Mittel, um kontinuierlich eine nicht haftende Bodenbelagsbahn (1) auf ihrer Unterseite (3), die dazu bestimmt ist, auf den Boden gelegt zu werden, durchlaufen zu lassen;
ii. Mittel, um kontinuierlich ein Transferklebeband (7), umfassend eine Klebstoffschicht (2), die dazu bestimmt ist, auf der Unterseite (3) der Belagsbahn (1) befestigt zu werden, und einen nicht haftenden Schutzträger (8) durchlaufen zu lassen, wobei die Breite des Transferklebebandes (7) größer als die Breite der Belagsbahn (1) ist, so dass die Klebstoffschicht (2) und ihr Schutzträger (8) auf jeder Seite der Belagsbahn (1) überragen;
iii. Mittel zur Neutralisierung der beiden Ränder (9, 10) der Klebstoffschicht (2) auf jeder Seite der Belagsbahn (1), wobei die Mittel vorzugsweise zwei Streifen (iii.1, iii.2), vorteilhafterweise aus Papier oder Polymerschaum, umfassen;
iv. mindestens einen Kalander (11) zum Kaschieren des Transferklebebandes (7) auf die Unterseite (3) und vorzugsweise zum Kaschieren von zwei Neutralisierungsstreifen (iii.1, iii.2) der beiden Ränder (9, 10) der Klebstoffschicht (2) auf jede Seite der Belagsbahn (1);
v. mindestens einen Kalander (14) zur Unterstützung des Herausziehens der beiden Ränder (9, 10) der Klebstoffschicht (2) und der beiden Neutralisierungsstreifen (iii.1, iii.2) und eventuell der Schutzfolie (8) des Transferbandes (7);
vi. eventuell Mittel, um kontinuierlich eine Schutzfolie (19) mit einer größeren Breite als die Belagsbahn (1) durchlaufen zu lassen;
vii. und eventuell mindestens einen Kalander (20) zum Kaschieren der Schutzfolie (19) auf die Unterseite (3) der Belagsbahn (1), die mit der Klebstoffschicht (2) überzogen ist, auf Höhe der Abschnitte (5, 6) des Haftbelags (1).

12. Verfahren zur Verkleidung eines Trägers, insbesondere eines Bodens, umfassend die Schritte, darin bestehend:
- das Verfahren zum Haftendmachen nach mindestens einem der Ansprüche 1 bis 10 einzusetzen, um einen Belag (1) zu erhalten, umfassend eine Belagsbahn und ein Transferklebeband (7) auf der Unterseite (3) der Belagsbahn (1) wobei das Transferklebeband (7) eine Klebstoffschicht (2), die auf der Unterseite (3) der Belagsbahn (1) befestigt ist und auf Höhe des Abschnitts (5, 6) der Belagsbahn (1) gelangt, und einen Schutzträger (8) umfasst,
- den Schutzträger (8) oder gegebenenfalls die Schutzfolie (19) herauszuziehen,
- den Belag (1) auf dem Träger mit Hilfe der Klebstoffschicht (2) zu befestigen.

## Claims

1. Method for spreading an adhesive continuously on a covering (1), preferably a self-adhesive floor covering, based on a non-adhesive covering (1) consisting of:
a/ laminating onto the lower surface (3) of a continuously running covering sheet (1), an adhesive transfer tape (7) comprising an adhesive film (2) intended to be fixed on the lower surface (3) of the covering sheet (1) and a non-adhesive protective substrate (8), the width of the adhesive transfer tape (7) being greater than the width of the covering sheet (1) so that the adhesive film (2) and its protective substrate (8) project beyond each side of the covering sheet (1);
b/ neutralizing the two longitudinal borders (9,10) of the adhesive film (2) on each side of the covering sheet (1), by sandwiching each of them between the longitudinal edge (17,18) of the protective substrate (8) of the adhesive transfer tape (7) and neutralizing means (iii.1, iii.2) in contact with the border and meeting flush with the edge surface (5,6) of the covering sheet (1);
c/ then removing the two borders (9,10) of the adhesive film (2) so as to obtain a clean break in the adhesive film (2) flush with the edge surface (5,6) of the covering sheet (1).

2. Method according to claim 1, **characterized in that**:
- in step b/, the neutralizing means (iii) comprise two strips (iii.1, iii.2), preferably made of paper or polymer foam, the inner longitudinal edge of each strip (iii.1, iii.2) supporting or flush with the edge surface (5,6) of the covering sheet (1);
- and in step c/, the two neutralizing strips (iii.1, iii.2) are removed, which at the same time results in the removal of the two borders (9,10) of the adhesive film (2).

3. Method according to claim 2, **characterized in that** in step c/, the removal of the two strips (iii.1, iii.2) and of the two borders (9,10) of the adhesive film (2), is obtained by removal of the protective substrate (8) of the transfer tape (7) which takes with it the neutralizing strips (iii.1, iii.2) firmly fixed to the longitudinal edges (17,18) of the protective substrate (8) by means of the longitudinal borders (9,10) of the adhesive film (2).

4. Method according to claim 3, **characterized in that** it also comprises a step d/ essentially consisting of laminating onto the adhesive film (2), a protective film (19) with a width greater than the covering sheet (1).

5. Method according to at least one of claims 2 to 4, **characterized in that**, in step b/, the neutralizing means (iii) comprise, in addition to or instead of the neutralizing strips (iii.1, iii.2), at least one set of cylinders (12,13) comprising a cylinder (12) and a counter cylinder (13) that are arranged edge to edge with each longitudinal edge surface (5,6) of the covering sheet (1) in order to sandwich the border of the adhesive film (2) projecting beyond each side of the sheet, with the edge (17,18) of the protective substrate (8).

6. Method according to claim 1, **characterized in that**, in step b/, the neutralizing means (iii.1, iii.2), on the one hand, comprise, on each side of the sheet, at least one set of cylinders including at least one pressure cylinder and at least one counter cylinder and, on the other hand, are designed to cut off the adhesive film (2) flush with each longitudinal edge surface (5,6) of the covering sheet (1).

7. Method according to at least one of the previous claims, **characterized in that** the covering (1) comprises at least one layer based on at least one material preferably selected from the group including:
- the (co)polymers, advantageously polyvinyl chloride (PVC), the polyesters or natural or synthetic rubbers;
- the linoleums;
- and combinations of these materials.

8. Method according to at least one of the previous claims, **characterized in that** the laminating of the adhesive film is carried out hot, preferably at a temperature of the order of 60-70°C.

9. Method according to at least one of the previous claims, **characterized in that** the non-adhesive protective substrate (8) of the adhesive transfer tape (7) of step a/ and the protective film (19) of step d/ are preferably formed by a polymer film, advantageously of polypropylene, coated on the surface intended to be applied to the adhesive film, with an anti-adhesive covering, preferably of silicone, and **in that** the adhesive film (2) is acrylic-based.

10. Method according to at least one of the previous claims, **characterized in that** the covering (1) is a floor covering for buses, cars, trains, trams, metros, aircraft or boats, for floors of buildings, for sports surfaces, or also for furnishings.

11. Device for implementing the method according to any one of claims 1 to 10, **characterized in that** it comprises:
i. means for causing the continuous running of a non-adhesive floor covering sheet (1) on its lower surface (3) intended to be applied to the floor;
ii. means for causing the continuous running of an adhesive transfer tape (7) comprising an adhesive film (2) intended to be fixed on the lower surface (3) of the covering sheet (1) and a non-adhesive protective substrate (8), the width of the adhesive transfer tape (7) being greater than the width of the covering sheet (1) so that the adhesive film (2) and its protective substrate (8) project beyond each side of the covering sheet (1);
iii. means for neutralizing the two borders (9,10) of the adhesive film (2) on each side of the covering sheet (1), said means preferably comprising two strips (iii.1, iii.2), advantageously made of paper or polymer foam;
iv. at least one calender (11) for laminating the adhesive transfer tape (7) on the lower surface (3) and, preferably, for laminating two neutralizing strips (iii.1, iii.2) of the two borders (9,10) of the adhesive film (2) on each side of the covering sheet (i);
v. at least one calender (14) for aiding the removal of the two borders (9,10) of the adhesive film (2) and the two neutralizing strips (iii.1,iii.2), and optionally the protective film (8) of the transfer tape (7);
vi. optionally means for causing the continuous running of a protective film (19) with a width greater than the covering sheet (1);
vii. and optionally at least one calender (20) for laminating the protective film (19) onto the lower surface (3) of the covering sheet (1) coated with the adhesive film (2) meeting flush with the edge surfaces (5,6) of the adhesive covering (1).

12. Method for coating a support, in particular a floor, comprising the step consisting of:
- implementing the method for spreading adhesive according to at least one of claims 1 to 10, so as to obtain a covering (1) comprising a covering sheet and an adhesive transfer tape (7) on the lower surface (3) of the covering sheet (1), the adhesive transfer tape (7) comprising an adhesive film (2) fixed on the lower surface (3) of the covering sheet (1) and meeting flush with the edge surface (5, 6) of the covering sheet (1), and a protective substrate (8),
- removing the protective substrate (8) or, if appropriate, the protective film (19),
- fixing the covering (1) on the support by means of the adhesive film (2).
